# EUROPEAN PATENT APPLICATION

(11) **EP 4 745 938 A1**
(43) Date of publication of application: **20.05.2026**
(21) Application number: 25208461.1
(22) Date of filing: 14.10.2025
(51) Int. Cl.: G08G 1/14, G01C 21/36

(54) **SYSTEM AND METHOD FOR PROVIDING PARKING INFORMATION**

(30) Priority: 18.11.2024 TW 113144260
(71) Applicant: IVTES LTD., New Taipei City (TW)
(72) Inventor: Chen, Chi-Ting, New Taipei City (TW)
(74) Representative: Petraz, Gilberto Luigi

(57) **Abstract**

System and Method for Providing Parking Information

The present invention provides a system and method for providing parking information, comprising a mobile device and an in-vehicle device (10) capable of controlling a car to lock or unlock. After establishing a wireless connection between the mobile device and the in-vehicle device (10) which are paired, the mobile device continuously determines whether the connection between the two devices is maintained. Upon disconnection of the wireless connection, the mobile device records coordinate information of the mobile device at the time of disconnection as a parking coordinate of the car. An application on the mobile device displays a map view (22) in response to a user command, with a mark (23) corresponding to the parking coordinate illustrated on the map view (22). Thus, users can query the mobile device and find the car's parking location without installing a GPS device in the car.

## Description

The present invention relates to a system for indicating the location of a car, particularly to an auxiliary system that can record where the vehicle owner parks the car, without being restricted by external environment.

A car parking space information assistance system currently focuses on specific venues or facilities, such as parking lots. When a car enters a parking lot, the parking lot will indicate currently available parking spaces or further provide route guidance to the driver to the parking space. This type of application focuses on providing parking spaces.

On the other hand, car owners may also need to record where they have parked. For example, if they do not deliberately record their parking location when parking in a large parking lot or an unfamiliar area, they may forget where they parked. This could result in them spending a lot of time trying to remember where they left the car, which would be inconvenient when retrieving the car.

In view of the above-mentioned issues, one of the objectives of the present invention is to provide a system for providing parking information that can automatically record a current location information of a car after the car is parked for the car owner's reference.

To achieve the aforementioned objectives, the present invention provides a system for providing parking information, comprising:
an in-vehicle device for installation in a car, the in-vehicle device comprising:
a processor;
a Bluetooth transceiver module connected to the processor, for connecting to an external device; and
a door lock control module, connected to the processor, for outputting signals to control the car to perform locking or unlocking;
a mobile device establishing wireless connection with the Bluetooth transceiver module of the in-vehicle device, the mobile device having an application installed thereon for controlling the in-vehicle device;
wherein, when the wireless connection between the mobile device and the in-vehicle device is disconnected, the mobile device records its current coordinate information as a parking coordinate of the car; and the mobile device displays the parking coordinate via the application program in response to a user operation.

One of the objects of the present invention is to provide a method for providing parking information, the method comprising:
establishing a wireless connection between the mobile device and an in-vehicle device, wherein the in-vehicle device is installed in a car to control the car to perform locking or unlocking;
the mobile device continuously determining whether wireless connection between the mobile device and the in-vehicle device is maintained in a connected state;
when the mobile device determines that wireless connection with the in-vehicle device has been disconnected, the mobile device recording the coordinate information of the mobile device at the time of disconnection as the parking coordinate of the car;
the mobile device displaying a map view according to a command, and illustrating a mark at a location corresponding to the parking coordinate on the map view.

The mobile device of the present invention allows users to find their car's parking location without installing a GPS device in their car. The mobile device automatically records the coordinate information at the time of disconnection as the car's parking coordinate, eliminating the need for users to manually record their parking location each time they park, thus improving user convenience.

In order to make the above objects, features and advantages of the present invention more apparent and easier to understand, the following embodiments, together with the accompanying drawings, are described in detail as follows.

**In** the drawings:
Figure 1 illustrates a system circuit block diagram of the present invention;
Figure 2 illustrates a flowchart of a first embodiment of a method of the present invention;
Figure 3A illustrates a schematic diagram of a connection between an in-vehicle device and a mobile device according to the present invention;
Figure 3B shows a schematic diagram of the present invention illustrating the disconnection between an in-vehicle device and a mobile device;
Figure 4 shows a schematic diagram of the present invention displaying a map view on a mobile device with the parking coordinate marked on the map view;
Figure 5 illustrates a flowchart of a second embodiment of the method of the present invention; and
Figure 6 illustrates a flowchart of the method of the present invention for automatic activation of an auto-lock/unlock function.

The technical contents, features and effects of the present invention will be clearly presented in the following detailed description of the preferred embodiment with reference to the drawings. In addition, the directional terms mentioned in the following embodiments, such as: up, down, left, right, front, back, bottom, top, etc., are only relative directions with reference to the drawings, and do not represent absolute directional positions; therefore, the directional terms used are for the convenience of illustrating their relative positional relationships, and are not intended to impose limitations on the present invention.

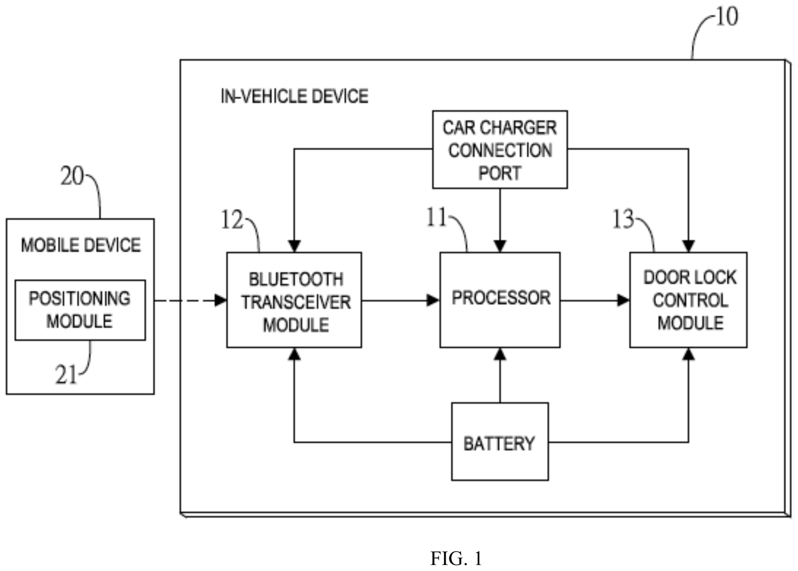

Please refer to Figure 1. The parking space information assistance system of the present invention comprises an in-vehicle device 10 and a mobile device 20, which can be connected wirelessly or via a wired connection to transmit information. In one embodiment, the in-vehicle device 10 is installed inside a car. The in-vehicle device 10 includes a processor 11, a Bluetooth^{®} transceiver module 12, and a door lock control module 13. The Bluetooth transceiver module 12 and the door lock control module 13 are respectively connected to the processor 11. The door lock control module 13 is used to control the locking and unlocking of the car. The door lock control module 13 can enable an auto-lock/unlock function or disable (turn off) the auto-lock/unlock function according to a setting. When the auto-lock/unlock function is disabled, the door lock control module 13 operates as a manual lock/unlock function. When the auto-lock/unlock function is enabled, the mobile device 20 automatically determines whether relevant conditions are met and sends a lock command or unlock command to the in-vehicle device 10. Conversely, when the auto-lock/unlock function is disabled, the user must manually operate the mobile device 20 to control it in issuing lock or unlock commands to the in-vehicle device 10.

The in-vehicle device 10 may incorporate an internal battery to supply its own working needs. On the other hand, the in-vehicle device 10 may be provided with a car charger connection port to connect to the car's internal DC power source.

The mobile device 20 may be the user's mobile phone, which has an application (APP) installed internally. The mobile device 20 pairs and authenticates with the in-vehicle device 10 via this application to enable wireless connection between the two parties. For example, the mobile device 20 communicates wirelessly with the in-vehicle device 10 through the Bluetooth transceiver module 12. Wherein, the mobile device 20 comprises a positioning module 21 capable of generating coordinate information of the mobile device 20. The user can use the application to set whether to enable or disable the auto-lock/unlock function of the in-vehicle device 10.

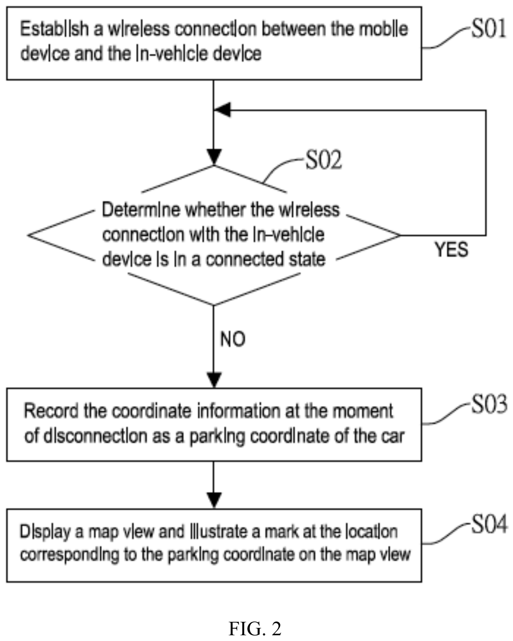

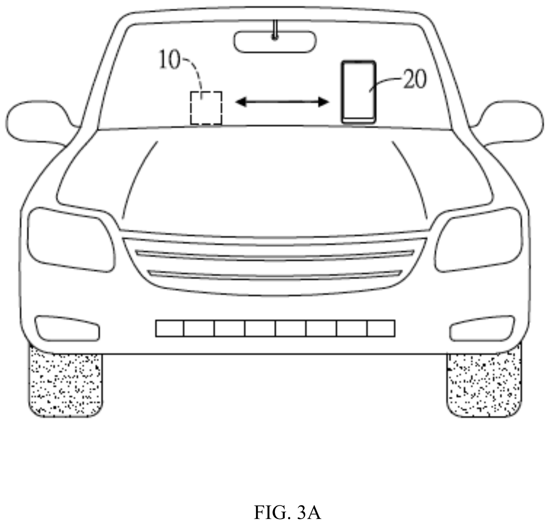

Please refer to FIG2, which is a flow chart of a first embodiment of the method of the present invention, comprising the following steps:
S01: Establish a wireless connection between the mobile device 20 and the in-vehicle device 10. Since the mobile device 20 and the in-vehicle device 10 have already been paired, the user can operate the mobile device 20 to send a connection request to the in-vehicle device 10 via the application on the mobile device 20, or operate the in-vehicle device 10 to send a connection request to the mobile device 20. When the relative distance between the mobile device 20 and the in-vehicle device 10 falls below a preset threshold, as shown in Figure 3A, for example, when the user carries the mobile device 20 and enters the car interior, a wireless connection link can be established between the two devices.

In another embodiment, the mobile device 20 or the in-vehicle device 10 continuously and automatically issues a connection request to the other party. When the relative distance between the mobile device 20 and the in-vehicle device 10 is less than a preset distance, a wireless connection link is established between the two devices. For example, a Bluetooth wireless connection may be established between the Bluetooth transceiver module 12 of the mobile device 20 and the Bluetooth transceiver module 12 of the in-vehicle device 10.

S02: The mobile device 20 continuously determines whether the wireless connection with the in-vehicle device 10 is in a connected state. After establishing wireless connection with the in-vehicle device 10, the mobile device 20 continuously monitors whether the connection between the two devices is still maintained. If not, the process proceeds to the next step.

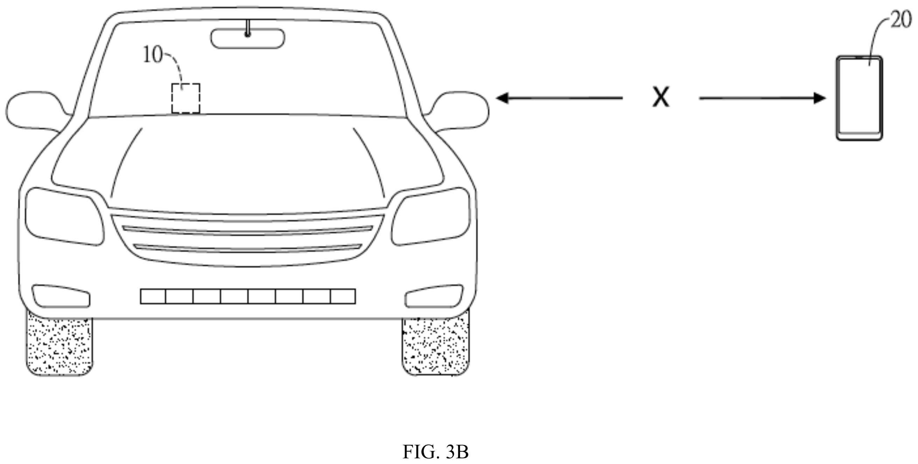

S03: When the mobile device 20 determines that it can no longer maintain a connection with the in-vehicle device 10, the mobile device 20 records the coordinate information at the moment of disconnection as the parking coordinate of the car. This is because after the user has parked and left the car, as shown in FIG. 3B, the signal strength between the mobile device 20 and the in-vehicle device 10 will weaken, eventually leading to disconnection. Therefore, the mobile device 20 records the coordinate information at the time of disconnection as the parking coordinate of the car.

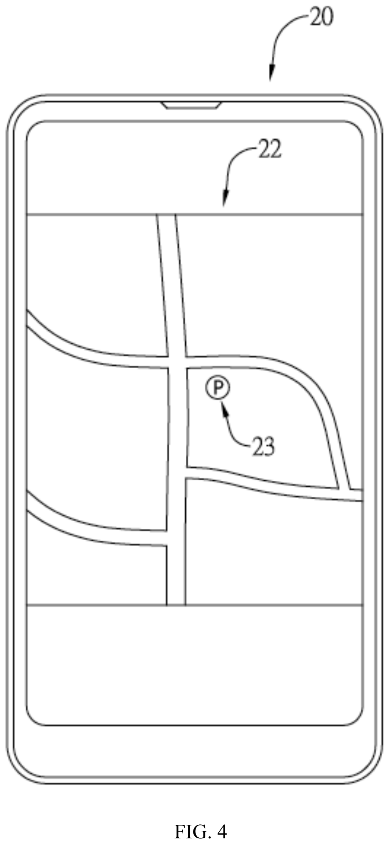

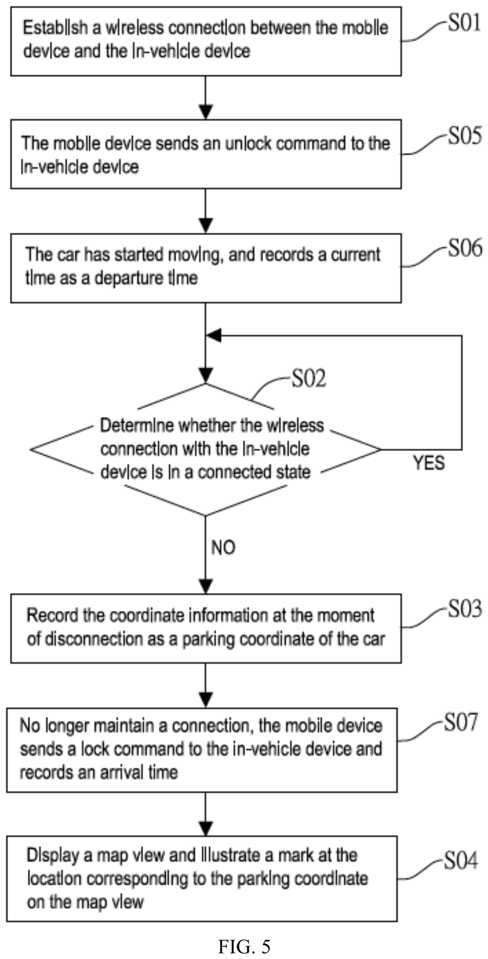

S04: The mobile device 20 displays a map view 22 and illustrates a mark 23 at the location corresponding to the parking coordinate on the map view 22. Refer to Figure 4. In this step, the user can operate the application on the mobile device 20 to input a query command. This query command is used to retrieve the parking location previously recorded by the user. Upon receiving the query command, the application on the mobile device 20 displays the map view 22 and illustrates the mark 23 on the map view 22. Please refer to FIG. 5, which is a flow chart of a second embodiment of the method of the present invention. Compared with steps S01 to S04 of the first embodiment, this embodiment further includes the following steps S05 to S07:

S05: The mobile device 20 sends an unlock command to the in-vehicle device 10, instructing the in-vehicle device 10 to unlock the car doors. Step S05 may be executed following step S01 or concurrently with step S01.

When the aforementioned auto-lock/unlock function is enabled, the unlock command can be automatically generated by the mobile device 20 when it determines that the mobile device 20 and the in-vehicle device 10 are connected; or when the auto-lock/unlock function is not enabled, the unlock command can be manually input by the user through the mobile device 20.

S06: When the mobile device 20 determines that the car has started moving, it records a current time as a departure time. If the user carries the mobile device 20 and has entered the car interior, the mobile device 20 can determine whether the car has begun moving based on the coordinate information output by its positioning module 21. When the car starts moving forward, the mobile device 20 records the current time and defines it as a departure time, provided the car is unlocked and has begun moving. Furthermore, as the car continues to move, the mobile device 20 continuously accumulates and calculates a driving time.

S07: When the mobile device 20 determines that it can no longer maintain a connection with the in-vehicle device 10, the mobile device 20 sends a lock command to the in-vehicle device 10 and records an arrival time, and simultaneously stops the calculation of the driving time. The lock command is used to control the in-vehicle device 10 to lock the car doors. The mobile device 20 continues to accumulate and calculate a parking time until the next departure time calculation begins. Step S07 may be executed following step S03 or concurrently with step S03. When the aforementioned auto-lock/unlock function is enabled, the lock command may be automatically generated by the mobile device 20 upon determining that the connection between the mobile device 20 and the in-vehicle device 10 has been disconnected; or, when the auto-lock/unlock function is disabled, the lock command is manually input by the user through operation of the mobile device 20. In the above-mentioned second embodiment, the present invention further incorporates functions for calculating " departure time" and "arrival time". Users can query their accumulated driving time and accumulated parking time through an application on their mobile device 20. Based on the accumulated driving time, the mobile device 20 can issue timely reminders to prevent the user from excessive driving fatigue. Furthermore, based on the parking time, the mobile device 20 can calculate and display a parking fee for the user's reference.

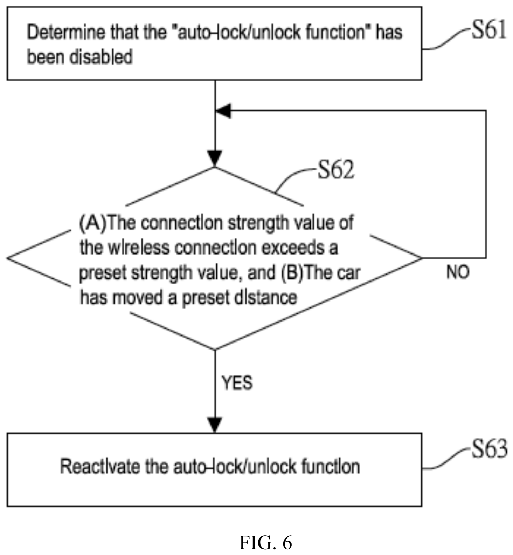

Referring to FIG. 6, with respect to the method of the first embodiment or the second embodiment above, the present invention may further include the following steps when the car is started:

S61: The mobile device 20 determines that the "auto-lock/unlock function" has been disabled. The user may have previously manually disabled the "auto-lock/unlock function"; in this case, the mobile device 20 further performs the following steps.

S62: The mobile device 20 determines whether both of the following two conditions are met: A. The connection strength value of the wireless connection between the mobile device 20 and the in-vehicle device 10 exceeds a preset strength value; B. Based on the coordinate information generated by its positioning module 21, the mobile device 20 determines that the car has moved a preset distance (e.g., 100 meters).

S63: When both conditions A and B are met, it indicates the user is driving the car. The mobile device 20 automatically issues an enable command to reactivate the "auto-lock/unlock function." The mobile device 20 then issues a lock command to control the in-vehicle device 10, thereby locking the car.

The present invention, through the steps of FIG.6, can ensure that even if the user disables the "auto-lock/unlock function", once the mobile device 20 determines that the user has started driving the car, and if the car is not automatically locked, there may be safety concerns. Therefore, based on safety considerations, the mobile device 20 will actively enable the "auto-lock/unlock function" again after determining that the relevant conditions are met.

In summary, the present invention does not require the installation of any GPS positioning device on the car, and the user does not need to manually record the parking coordinate each time after parking. The mobile device can automatically record the car's parking coordinate, making it convenient to quickly query the car's location when picking up the car later; and can further automatically calculate the user's driving time and parking time, can timely remind the user of rest breaks during long-distance drives, and can estimate the parking fee for the user's reference.

Although the present invention has been disclosed as above by way of a preferred embodiment, it is not intended to limit the present invention, and any one skilled in the art may make certain changes and modifications without departing from the spirit and scope of the present invention, and therefore the scope of protection of the present invention shall be subject to the scope of the appended patent claims as defined herein.

## Claims

1. A system for providing parking information, **characterized by** comprising:
an in-vehicle device (10) for installation within a car, the in-vehicle device (10) comprising:
a processor (11);
a Bluetooth transceiver module (12) connected to the processor (11), for connecting to an external device; and
a door lock control module (13) connected to the processor (11), for outputting signals to control the car to perform locking or unlocking;
a mobile device (20) establishing wireless connection with the Bluetooth transceiver module (12) of the in-vehicle device (10), the mobile device (20) having an application installed thereon for controlling the in-vehicle device (10);
wherein, when the wireless connection between the mobile device (20) and the in-vehicle device (10) is disconnected, the mobile device (20) records its current coordinate information as a parking coordinate for the car; and the mobile device (20) displays the parking coordinate via the application in response to a user operation;
when the mobile device (20) sends an unlock command to the in-vehicle device (10) and determines the car has begun moving, the mobile device (20) records a current time as a departure time and continuously calculates a driving time;
when the mobile device (20) determines that the connection with the in-vehicle device (10) is no longer maintained, the mobile device (20) sends a lock command to the in-vehicle device (10) and records an arrival time, and continuously calculates a parking time.

2. The system for providing parking information as claimed in claim 1, wherein the mobile device (20) displays a map interface and a mark (23) corresponding to the parking coordinate via the application.

3. The system for providing parking information as claimed in claim 1, wherein the application is configurable to enable or disable an auto-lock/unlock function;
when the auto-lock/unlock function is enabled, the mobile device (20) automatically sends a lock command or an unlock command to the in-vehicle device (10).

4. The system for providing parking information as claimed in claim 2, wherein the application is configurable to enable or disable an auto-lock/unlock function;
when the auto-lock/unlock function is enabled, the mobile device (20) automatically sends a lock command or an unlock command to the in-vehicle device (10).

5. The system for providing parking information as claimed in claim 3, wherein, when the auto-lock/unlock function is not enabled, the mobile device (20) automatically enables the auto-lock/unlock function when the mobile device (20) determines that the strength of the wireless connection between the mobile device (20) and the in-vehicle device (10) is greater than a preset strength value and the car has moved a preset distance.

6. The system for providing parking information as claimed in claim 4, wherein, when the auto-lock/unlock function is not enabled, the mobile device (20) automatically enables the auto-lock/unlock function when the mobile device (20) determines that the strength of the wireless connection between the mobile device (20) and the in-vehicle device (10) is greater than a preset strength value and the car has moved a preset distance.

7. A method for providing parking information, executed by a mobile device (20), **characterized by** comprising:
establishing a wireless connection between the mobile device (20) and an in-vehicle device (10), wherein the in-vehicle device (10) is installed in a car to control the car to perform locking or unlocking;
continuously determining whether the wireless connection between the mobile device (20) and the in-vehicle device (10) is maintained in a connected state;
when the mobile device (20) determines that the wireless connection with the in-vehicle device (10) has been disconnected, the mobile device (20) records coordinate information of the mobile device (20) at the time of disconnection as a parking coordinate for the car;
when the wireless connection with the in-vehicle device (10) has been established, the mobile device (20) sends an unlock command to the in-vehicle device (10) to control the in-vehicle device (10) to unlock the vehicle door;
when the mobile device (20) determines that the car has begun to move, the mobile device (20) records a current departure time and continuously calculates a driving time;
when the mobile device (20) determines that the connection with the in-vehicle device (10) is no longer maintained, the mobile device (20) sends a lock command to the in-vehicle device (10) to control the in-vehicle device (10) to lock the vehicle doors, record an arrival time, and continuously calculate a parking time;
the mobile device (20) displaying a map view (22) in response to a command, and illustrating a mark (23) on the map view (22) corresponding to the parking coordinate.

8. The method for providing parking information as claimed in claim 7, wherein an application on the mobile device (20) provides a user configurable auto-lock/unlock function, and the method further comprises:
the mobile device (20) determines that the auto-lock/unlock function has been disabled;
the mobile device (20) determines whether a connection strength value of its wireless connection with the in-vehicle device (10) exceeds a preset strength value and whether the car has moved a preset distance;
when the connection strength value exceeds the preset strength value and the car has moved the preset distance, the mobile device (20) automatically enables the auto-lock/unlock function.

9. The method for providing parking information as claimed in claim 8, wherein when the mobile device (20) automatically enables the auto-lock/unlock function, the mobile device (20) automatically issues a lock command to the in-vehicle device (10).

10. The method for providing parking information as claimed in claim 9, wherein the mobile device (20) determines whether the car has moved the preset distance based on changes in the coordinate information.
